# EUROPÄISCHE PATENTSCHRIFT

(11) **EP 3 285 988 B1**
(45) Veröffentlichungstag und Bekanntmachung des Hinweises auf die Patenterteilung: **27.03.2019**
(21) Anmeldenummer: 16716191.8
(22) Anmeldetag: 08.04.2016
(51) Int. Cl.: B29C 64/153, B33Y 10/00, B33Y 30/00

(54) **VERFAHREN UND VORRICHTUNG ZUM HERSTELLEN EINES DREIDIMENSIONALEN OBJEKTS**
METHOD AND DEVICE FOR PRODUCING A THREE-DIMENSIONAL OBJECT
PROCÉDÉ ET DISPOSITIF DE FABRICATION D'UN OBJET TRIDIMENSIONNEL

(30) Priorität: 20.04.2015 DE 102015207158
(43) Veröffentlichungstag der Anmeldung: 28.02.2018
(73) Patentinhaber: EOS GmbH Electro Optical Systems, 82152 Krailling (DE)
(72) Erfinder: PHILIPPI, Jochen, 82166 Gräfelfing (DE)
(74) Vertreter: Prüfer & Partner mbB Patentanwälte · Rechtsanwälte
(86) Internationale Anmeldenummer: PCT/EP2016/057691
(87) Internationale Veröffentlichungsnummer: WO 2016/169783

(56) Entgegenhaltungen:
- WO-A1-2014/012764
- US-A1- 2009 176 007

## Beschreibung

Die vorliegende Erfindung bezieht sich auf ein Verfahren und eine Vorrichtung zum Herstellen eines dreidimensionalen Objekts durch schichtweises Aufbringen und selektives Verfestigen eines pulverförmigen Aufbaumaterials.

Verfahren und Vorrichtungen dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

Dabei wird jedoch oftmals nicht die volle, zum Verfestigen erforderliche Energie durch den Laserstrahl aufgebracht, sondern das Aufbaumaterial vor dem Verfestigen vorgeheizt. DE 10 2005 024 790 A1 beschreibt eine Lasersintervorrichtung, bei der das pulverförmige Aufbaumaterial mittels eines über eine Arbeitsebene hin- und herbewegbaren Beschichters aufgebracht wird. Zum Vorwärmen einer aufgebrachten, aber noch nicht gesinterten Pulverschicht ist eine Strahlungsheizung oberhalb der Arbeitsebene angeordnet.

Dabei ist jedoch das zuerst (zu Beginn der Bewegung des Beschichters über die Arbeitsebene) aufgebrachte Aufbaumaterial länger der Strahlungsheizung ausgesetzt als das zuletzt aufgebrachte und wird dementsprechend auch länger beheizt. Dadurch ergibt sich in der Bewegungsrichtung des Beschichters eine inhomogene Temperaturverteilung in der aufgebrachten Schicht, was zu Qualitätseinbußen bei dem hergestellten Objekt führen kann. Um sicherzustellen, dass auch das zuletzt aufgebrachte Aufbaumaterial hinreichend lang der Strahlungsheizung ausgesetzt ist, damit es die zum Verfestigen erforderliche Arbeitstemperatur erreicht hat, ist nach dem Aufbringen der Pulverschicht und vor dem Beginn des Bestrahlens mit dem Laserstrahl eine Wartezeit erforderlich. Das wirkt sich negativ auf die zur Herstellung des Objekts erforderliche Zeit aus.

WO 2014/012764 A1 beschreibt ein Verfahren zum Aufbringen einer Aufbaumaterialschicht in Form zweier Teilschichten, wobei das aufgebrachte Aufbaumaterial zwischen dem Aufbringen der beiden Teilschichten und nach dem Aufbringen der zweiten Teilschicht durch eine Strahlungsheizung aufgeheizt wird. Einsenkungen, welche sich an dem selektiv verfestigten Objektquerschnitt einer vorhergehenden Schicht ausbilden, werden dabei durch Aufbaumaterial aufgefüllt.

US 2009/0176007 A1 beschreibt ein Verfahren zum Herstellen eines dreidimensionalen Objekts, wobei in vorab festgelegten Bereichen eine von anderen Bereichen abweichende Korngröße des verfestigten Aufbaumaterials vorgesehen ist. Dies wird beispielsweise durch Variieren der Schichtdicke erzielt.

Die Aufgabe der vorliegenden Erfindung besteht darin, ein verbessertes Verfahren bzw. eine verbesserte Vorrichtung zum Herstellen eines dreidimensionalen Objekts durch schichtweises Aufbringen und selektives Verfestigen eines pulverförmigen Aufbaumaterials bereitzustellen. Dabei wird unter einer Verbesserung insbesondere bevorzugt verstanden, dass die Qualität des hergestellten Objekts verbessert und/oder seine Herstellungszeit verkürzt und/oder das entsprechende Verfahren effektiver bzw. effizienter ist.

Diese Aufgabe wird gelöst durch ein Verfahren gemäß Anspruch 1, ein Computerprogramm gemäß Anspruch 10, eine Steuereinheit gemäß Anspruch 11 und eine Vorrichtung gemäß Anspruch 12. Weiterbildungen der Erfindung sind jeweils in den Unteransprüchen angegeben. Dabei können das Verfahren und das Computerprogramm auch durch die untenstehenden bzw. in den Unteransprüchen ausgeführten Merkmale der Steuereinheit bzw. der Vorrichtung weitergebildet sein bzw. auch jeweils umgekehrt.

Das erfindungsgemäße Verfahren zum Herstellen eines dreidimensionalen Objekts durch schichtweises Aufbringen und selektives Verfestigen eines pulverförmigen Aufbaumaterials in einer Vorrichtung enthält die Schritte: Aufbringen einer Pulverschicht des pulverförmigen Aufbaumaterials auf ein Baufeld auf einer Auftragsfläche der Vorrichtung mittels eines sich in einer Bewegungsrichtung über die Auftragsfläche bewegenden Beschichters, selektives Verfestigen der aufgebrachten Pulverschicht an Stellen, die einem Querschnitt des herzustellenden Objekts entsprechen, und Wiederholen der Schritte des Aufbringens und des selektiven Verfestigens, bis das Objekt fertiggestellt ist. Dabei wird zumindest eine Anzahl ausgewählter Schritte des Aufbringens der Pulverschicht, also zumindest ein Schritt oder eine Mehrzahl von Schritten, dergestalt durchgeführt, dass eine Höhe der aufgebrachten Pulverschicht zumindest über einen Abschnitt der Pulverschicht hinweg entlang der Bewegungsrichtung des Beschichters verändert wird, vorzugsweise monoton zu- oder abnimmt.

Zum Begriff der "Auftragsfläche" ist anzumerken, dass dieser hier anstatt der gebräuchlichen und oben verwendeten Terminologie der "Arbeitsebene" verwendet wird, da es sich dabei zwangsläufig (zumindest in manchen Zuständen des erfindungsgemäßen
Verfahrens) nicht um eine Ebene, sondern um eine geneigte Fläche handelt. Alternativ könnte man auch von einer "Arbeitsfläche" sprechen, die eben nicht zwangsläufig immer eben sein muss.

Mit diesem Verfahren ist es zum Beispiel möglich, durch Verringerung eines Temperaturgradienten in einer Schicht und durch Verkürzen der Wartezeit zwischen Aufbringen und Verfestigen sowohl die Qualität des hergestellten Objekts zu erhöhen als auch seine Herstellungszeit zu verkürzen.

Vorzugsweise wird der zumindest eine ausgewählte Schritt oder die Mehrzahl ausgewählter Schritte dergestalt durchgeführt, dass die Höhe der aufgebrachten Pulverschicht nur über einen Teilabschnitt der Pulverschicht hinweg in der Bewegungsrichtung des Beschichters verändert wird.

Dadurch ist es möglich, die zum Verändern der Pulverschicht erforderlichen Maßnahmen auf einen Bereich zu begrenzen, in dem sie wirklich benötigt werden.

Zum Verändern der Höhe der aufgebrachten Pulverschicht wird vorzugsweise ein Beschichtungsabstand des Beschichters relativ zur Auftragsfläche während seiner Bewegung über die Auftragsfläche hinweg durch eine im Wesentlichen vertikale Bewegung des Beschichters verändert wird. Zusätzlich oder alternativ wird ein Abstand einer Bauplattform bzw. Grundplatte, auf der das Objekt aufgebaut wird, relativ zur Auftragsfläche während der Bewegung des Beschichters über die Auftragsfläche hinweg durch eine im Wesentlichen vertikale Bewegung der Bauplattform bzw. Grundplatte verändert. Zusätzlich oder alternativ wird die Bauplattform vor und/oder während der Bewegung des Beschichters über die Auftragsfläche hinweg relativ zu einer im Wesentlichen horizontalen Ausrichtungsebene der Bauplattform bzw. Grundplatte geneigt.

Dadurch werden mehrere alternative Verfahren bereitgestellt, mit denen es möglich ist, die Höhe der aufgebrachten Pulverschicht entlang der Bewegungsrichtung des Beschichters zu verändern.

Vorzugsweise erfolgt der Schritt des Aufbringens der Pulverschicht bei jeder Wiederholung abwechselnd mittels einer Bewegung des Beschichters in einer ersten Bewegungsrichtung und mittels einer Bewegung des Beschichters in einer zweiten Bewegungsrichtung, wobei der Schritt des selektiven Verfestigens sowohl nach dem Aufbringen der Pulverschicht in der ersten Bewegungsrichtung als auch nach dem Aufbringen der Pulverschicht in der zweiten Bewegungsrichtung erfolgt, die Höhe der in der ersten Bewegungsrichtung aufgebrachten Pulverschicht zumindest über einen Abschnitt der Pulverschicht hinweg in der ersten Bewegungsrichtung verändert wird und/oder die Höhe der in der zweiten Bewegungsrichtung aufgebrachten Pulverschicht zumindest über einen Abschnitt der Pulverschicht hinweg in der zweiten Bewegungsrichtung verändert wird.

Dadurch kann das Verfahren in vorteilhafter Weise mittels eines Beschichters verwirklicht werden, der zwei Bewegungsrichtungen hat.

Vorzugsweise erfolgt der Schritt des Aufbringens der Pulverschicht bei jeder Wiederholung abwechselnd mittels einer Bewegung des Beschichters in einer ersten Bewegungsrichtung und mittels einer Bewegung des Beschichters in einer zweiten Bewegungsrichtung, wobei der Schritt des selektiven Verfestigens erst erfolgt, nachdem zumindest eine Pulverschicht in der ersten Bewegungsrichtung und zumindest eine Pulverschicht in der zweiten Bewegungsrichtung aufgebracht wurden, wobei die Höhe der in der ersten Bewegungsrichtung aufgebrachten Pulverschicht oder Pulverschichten zumindest über einen Abschnitt der Pulverschicht oder Pulverschichten hinweg in der ersten Bewegungsrichtung verändert wird und/oder die Höhe der in der zweiten Bewegungsrichtung aufgebrachten Pulverschicht oder Pulverschichten zumindest über einen Abschnitt der Pulverschicht oder Pulverschichten hinweg in der zweiten Bewegungsrichtung verändert wird.

Dadurch kann die Erfindung auch auf eine Doppel- oder Mehrfachbeschichtung vor dem Verfestigen angewandt werden.

Vorzugsweise ist dabei die Höhe der in der zweiten Bewegungsrichtung aufgebrachten Pulverschicht komplementär zu der Höhe der in der ersten Bewegungsrichtung aufgebrachten Pulverschicht gebildet, so dass eine Gesamthöhe der beiden aufgebrachten Pulverschichten an jeder Stelle gleich einer konstanten Höhe ist.

Dadurch liegen die Oberflächen jeder zweiten aufgebrachten Pulverschicht parallel zueinander. Bei der Doppelbeschichtung werden somit Pulverschichten konstanter Höhe verfestigt.

Vorzugsweise ist die zweite Richtung von der ersten Richtung verschieden, in weiter bevorzugter Weise ihr entgegengesetzt.

Dadurch kann das Verfahren in vorteilhafter Weise mittels eines hin- und herfahrenden Beschichters verwirklicht werden.

Vorzugsweise wird zumindest eine der Pulverschichten, bevorzugt eine Mehrzahl, besonders bevorzugt jede Pulverschicht während ihres Aufbringens beheizt.

Dadurch wird etwa die Pulverschicht bereits während des Aufheizens vorgeheizt und erreicht so schneller die erforderliche Arbeitstemperatur.

Vorzugsweise wird zumindest ein Parameterwert des selektiven Verfestigens der aufgebrachten Pulverschicht abhängig von der lokalen Höhe der Pulverschicht an der gerade zu verfestigenden Stelle geändert.

Dadurch wird zum Beispiel verhindert, dass je nach der lokalen Höhe der Pulverschicht die Verfestigung zu intensiv oder zu schwach ist.

Vorzugsweise erfolgt das Verfestigen durch selektives Abtasten der Oberfläche der aufgebrachten Pulverschicht an den zu verfestigenden Stellen mittels eines Energiestrahls, wobei ein Parameterwert des auf das Pulver auftreffenden Energiestrahls abhängig von der lokalen Höhe der Pulverschicht an der gerade zu verfestigenden Stelle geändert wird. Der zugrundeliegende Parameter ist vorzugsweise gewählt aus der Intensität und/oder der Leistung und/oder dem Fokus, insbesondere der Fokustopologie und/oder Fokuslage, des Energiestrahls und/oder der Abtastgeschwindigkeit, mit der der Energiestrahl über die Oberfläche der aufgebrachten Pulverschicht geführt wird.

Dadurch wird unter anderem verhindert, dass der Pulverschicht je nach ihrer lokalen Höhe zu viel oder zu wenig Energie zum Verfestigen zuführt.

Das erfindungsgemäße Computerprogramm ist in eine programmierbare Steuereinheit ladbar und enthält Programmcodemittel, um alle Schritte des erfindungsgemäßen Verfahrens auszuführen, wenn es auf der Steuereinheit ausgeführt wird.

Dadurch ist es insbesondere möglich, das erfindungsgemäße Erfahren auf einfache Weise durch Ausführen des Computerprogramms in einer Steuereinheit auszuführen.

Die erfindungsgemäße Steuereinheit für eine Vorrichtung zum Herstellen eines dreidimensionalen Objekts durch schichtweises Aufbringen und selektives Verfestigen eines pulverförmigen Aufbaumaterials ist dazu ausgebildet, im Betrieb folgende Schritte zu steuern: Aufbringen einer Pulverschicht des pulverförmigen Aufbaumaterials auf ein Baufeld auf einer Auftragsfläche der Vorrichtung mittels eines sich in einer Bewegungsrichtung über die Auftragsfläche bewegenden Beschichters, selektives Verfestigen der aufgebrachten Pulverschicht an Stellen, die einem Querschnitt des herzustellenden Objekts entsprechen, und Wiederholen der Schritte des Aufbringens und des selektiven Verfestigens, bis das Objekt fertiggestellt ist. Die Steuereinheit ist dabei dazu ausgebildet, zumindest eine Anzahl ausgewählter Schritte des Aufbringens der Pulverschicht dergestalt zu steuern, dass eine Höhe der aufgebrachten Pulverschicht zumindest über einen Abschnitt der Pulverschicht hinweg entlang der Bewegungsrichtung des Beschichters verändert wird, vorzugsweise monoton zu- oder abnimmt.

Dadurch ist es etwa möglich, das erfindungsgemäße Erfahren mittels einer Steuereinheit auszuführen.

Die erfindungsgemäße Vorrichtung zum Herstellen eines dreidimensionalen Objekts durch selektives schichtweises Verfestigen von pulverförmigem Aufbaumaterial umfasst einen über eine Auftragsfläche in einer Bewegungsrichtung bewegbaren Beschichter zum Aufbringen einer Schicht des pulverförmigen Aufbaumaterials auf ein Baufeld auf der Auftragsfläche und eine Verfestigungsvorrichtung zum selektives Verfestigen der aufgebrachten Pulverschicht an Stellen, die einem Querschnitt des herzustellenden Objekts entsprechen. Die Vorrichtung ist dabei dazu ausgebildet, die Schritte des Aufbringens und des selektiven Verfestigens zu wiederholen, bis das Objekt fertiggestellt ist, und zumindest eine Anzahl ausgewählter Schritte des Aufbringens der Pulverschicht dergestalt durchzuführen, dass eine Höhe der aufgebrachten Pulverschicht zumindest über einen Abschnitt der Pulverschicht hinweg entlang der Bewegungsrichtung des Beschichters verändert wird, vorzugsweise monoton zu- oder abnimmt.

Dadurch ist es möglich, das erfindungsgemäße Verfahren mittels einer Vorrichtung zum Herstellen eines dreidimensionalen Objekts auszuführen.

Vorzugsweise enthält die Vorrichtung weiter eine Strahlungsheizung zum Beheizen der Pulverschichten während ihres Aufbringens. Alternativ kann das (Vor-)Beheizen der Pulverschicht auch mittels einer kontaktbasierten Heizvorrichtung, etwa einer über die Pulverschicht verfahrbaren beheizbaren Rolle und/oder einer auf die Pulverschicht temporär auflegbaren (insbesondere beheizbaren und/oder durch Druckeinwirkung heizend wirkenden) Heizfolie, erfolgen.

Dadurch ist es möglich, die Pulverschicht bereits während des Aufheizens vorzuheizen, so dass es schneller die erforderliche Arbeitstemperatur erreicht.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht eines Ausführungsbeispiels einer Vorrichtung zum schichtweisen Herstellen eines dreidimensionalen Objekts, die zum Durchführen eines erfindungsgemäßen Verfahrens geeignet ist.
- Fig. 2a bis c: sind vergrößerte schematische Schnittansichten eines Ausschnitts, der in Fig. 1 von einer gestrichelten Linie umrahmt ist, und dienen der Erläuterung einer ersten Ausführungsform des erfindungsgemäßen Verfahrens.
- Fig. 3a bis c: sind vergrößerte schematische Schnittansichten eines Ausschnitts, der in Fig. 1 von einer gestrichelten Linie umrahmt ist, und dienen der Erläuterung einer ersten Abwandlung der ersten Ausführungsform.
- Fig. 4a bis c: sind vergrößerte schematische Schnittansichten eines Ausschnitts, der in Fig. 1 von einer gestrichelten Linie umrahmt ist, und dienen der Erläuterung einer zweiten Abwandlung der ersten Ausführungsform.
- Fig. 5a bis c: sind vergrößerte schematische Schnittansichten eines Ausschnitts, der in Fig. 1 von einer gestrichelten Linie umrahmt ist, und dienen der Erläuterung einer zweiten Ausführungsform des erfindungsgemäßen Verfahrens.
- Fig. 6a bis c: sind vergrößerte schematische Schnittansichten eines Ausschnitts, der in Fig. 1 von einer gestrichelten Linie umrahmt ist, und dienen der Erläuterung einer dritten Ausführungsform des erfindungsgemäßen Verfahrens.
- Fig. 7a bis c: sind vergrößerte schematische Schnittansichten eines Ausschnitts, der in Fig. 1 von einer gestrichelten Linie umrahmt ist, und dienen der Erläuterung einer vierten Ausführungsform des erfindungsgemäßen Verfahrens.

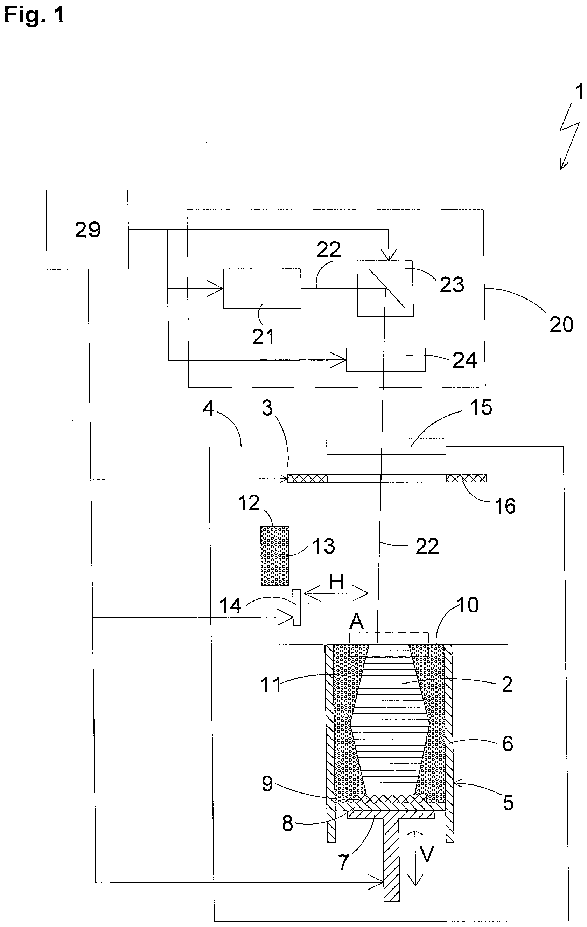

Im Folgenden wird mit Bezug auf Fig. 1 ein Ausführungsbeispiel einer Vorrichtung 1 beschrieben, die zum Durchführen eines erfindungsgemäßen Verfahrens geeignet ist. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer Auftragsfläche 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Auftragsfläche 10. An ihrer Oberseite enthält die Wandung 4 der Prozesskammer 3 ein Einkoppelfenster 15 für eine zum Verfestigen des Pulvers 13 dienende Strahlung. In der Prozesskammer ist ferner eine Strahlungsheizung 16 zum Vorheizen des aufgebrachten Aufbaumaterials vor dem Verfestigen angeordnet.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über das Einkoppelfenster 15 auf die Auftragsfläche 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 7 um eine Höhe abgesenkt, die der gewünschten Schichtdicke entspricht. Durch Verfahren des Beschichters 14 über die Auftragsfläche 10 wird dann eine Schicht des pulverförmigen Aufbaumaterials 13 aufgebracht. Das Aufbringen erfolgt zumindest über den gesamten Querschnitt des herzustellenden Objekts 2, vorzugsweise über das gesamte Baufeld, also den Bereich der Auftragsfläche 10, der innerhalb der oberen Öffnung des Behälters 5 liegt. Die aufgebrachte Pulverschicht wird durch die Strahlungsheizung 16 vorgeheizt. Anschließend wird der Querschnitt des herzustellenden Objekts 2 von dem Laserstrahl 22 abgetastet, so dass das pulverförmige Aufbaumaterial 13 an den Stellen verfestigt wird, die dem Querschnitt des herzustellenden Objekts 2 entsprechen. Diese Schritte werden solange wiederholt, bis das Objekt 2 fertiggestellt ist und dem Bauraum entnommen werden kann.

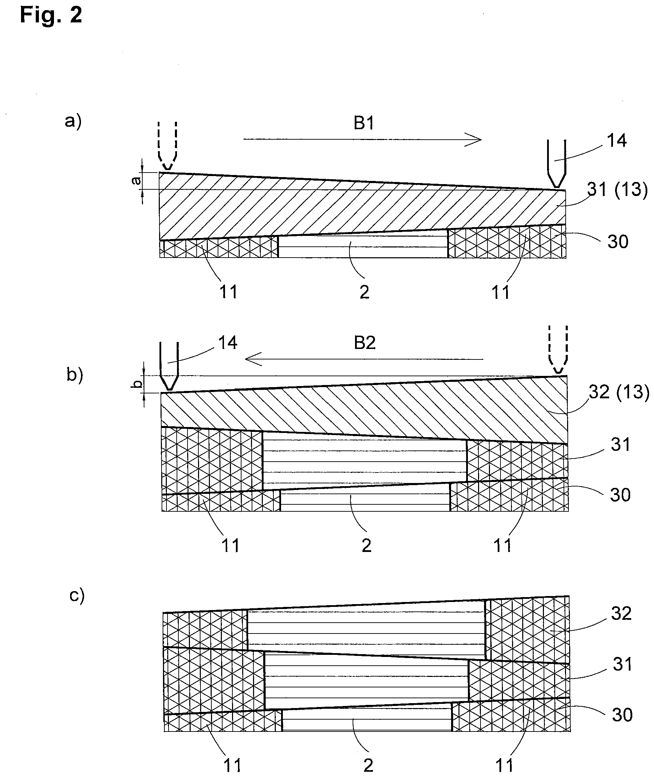

Mit Bezug auf Fig. 2 wird eine erste Ausführungsform eines Verfahrens zum Herstellen eines dreidimensionalen Objekts beschrieben.

Die drei Teilansichten a), b) und c) von Fig. 2 zeigen jeweils vergrößert einen Ausschnitt A, der in Fig. 1 von einer gestrichelten Linie umrahmt ist. Das erst teilweise fertig gestellte Objekt 2 ist von unverfestigt gebliebenem Pulver 11 umgeben.

Während die aufgebrachte Pulverschicht im Stand der Technik über die Auftragsfläche hinweg in der vertikalen Richtung eine konstante Höhe (=Dicke) aufweist, die durch die Absenkung des Trägers vor dem Beschichten bestimmt ist, sind die im Folgenden beschriebenen Ausführungsformen dadurch gekennzeichnet, dass zumindest eine Anzahl ausgewählter Schritte des Aufbringens der Pulverschicht, also zumindest ein Schritt oder eine Mehrzahl von Schritten, dergestalt durchgeführt wird, dass eine Höhe der aufgebrachten Pulverschicht zumindest über einen Abschnitt der Pulverschicht hinweg entlang einer Bewegungsrichtung des Beschichters verändert wird, vorzugsweise monoton zu- oder abnimmt, in weiter bevorzugter Weise linear zu- oder abnimmt.

In der ersten Ausführungsform wird dazu, wie in Fig. 2a) gezeigt, auf einer zuvor aufgebrachten und selektiv verfestigten Pulverschicht 30 zunächst eine weitere Pulverschicht 31 des Aufbaumaterials 13 mittels einer Bewegung des Beschichters 14 in einer ersten Bewegungsrichtung B1 (in der Figur von links nach rechts) aufgebracht. Dabei wird der Beschichter 14 zusätzlich zu seiner horizontalen Bewegung von seiner Ausgangsstellung (in der Figur links mit einer gestrichelten Linie dargestellt) in seine Endstellung (in der Figur rechts mit einer durchgezogenen Linie dargestellt) vertikal um eine vorbestimmte Höhe a abgesenkt. Die Höhe der aufgebrachten Pulverschicht 31 nimmt daher in der Bewegungsrichtung B1 des Beschichters 14 ab. Diese Veränderung der Höhe der Pulverschicht 31 ist vorzugsweise monoton, in weiter bevorzugter Weise linear.

Während des Aufbringens der Pulverschicht 31 wirkt die Strahlungsheizung 16 auf die bereits aufgebrachten Bereiche der Pulverschicht ein. Dabei werden die zuerst aufgebrachten Bereiche (in der Figur links) länger beheizt als die zuletzt aufgebrachten Bereiche (in der Figur rechts). Da die Höhe der Pulverschicht 31 in den zuletzt aufgebrachten Bereichen jedoch geringer ist und daher dort weniger Aufbaumaterial aufzuheizen ist, steigt die Temperatur dort auch schneller an. Dadurch ist ein Temperaturgradient in der aufgebrachten Pulverschicht in Beschichtungsrichtung geringer als beim Aufbringen einer Pulverschicht mit konstanter Schichthöhe. Außerdem erreichen die zuletzt aufgebrachten Bereiche schneller die zum Verfestigen erforderliche Arbeitstemperatur, so dass die Wartezeit zwischen dem Aufbringen der Pulverschicht und dem Bestrahlen mit dem Laser verringert werden kann.

Als Nächstes wird die Pulverschicht 31 durch Bestrahlen mit dem Laserstrahl selektiv verfestigt. Anschließend wird auf der selektiv verfestigten Pulverschicht 31, wie in Fig. 2b) gezeigt, eine weitere Pulverschicht 32 des Aufbaumaterials 13 mittels einer Bewegung des Beschichters 14 in einer zweiten Bewegungsrichtung B2 (in der Figur von rechts nach links) aufgebracht. In der vorliegenden Ausführungsform ist die zweite Bewegungsrichtung B2 der ersten Bewegungsrichtung B1 entgegengesetzt. Auch hierbei wird der Beschichter 14 zusätzlich zu seiner horizontalen Bewegung von seiner Ausgangsstellung (in der Figur rechts mit einer gestrichelten Linie dargestellt) in seine Endstellung (in der Figur links mit einer durchgezogenen Linie dargestellt) vertikal um eine vorbestimmte Höhe b abgesenkt. Die Höhe der aufgebrachten Pulverschicht 32 nimmt daher in der Bewegungsrichtung B2 des Beschichters 14 ab. Auch die Veränderung der Höhe der Pulverschicht 32 ist vorzugsweise monoton, in weiter bevorzugter Weise linear. In noch weiter bevorzugter Weise ist die Höhe der Pulverschicht 32 komplementär zu der Höhe der Pulverschicht 31 gebildet, so dass eine Gesamthöhe der beiden aufgebrachten Pulverschichten an jeder Stelle gleich einer konstanten, vordefinierten Höhe ist.

Auch in der Pulverschicht 32 werden die zuerst aufgebrachten Bereiche (in der Figur rechts) länger beheizt als die zuletzt aufgebrachten Bereiche (in der Figur links). Da jedoch die Höhe der Pulverschicht 32 in den zuletzt aufgebrachten Bereichen geringer ist, steigt die Temperatur dort auch schneller an. Dadurch ist auch in der Pulverschicht 32 ein Temperaturgradient in Beschichtungsrichtung verringert, und die Wartezeit zwischen dem Aufbringen der Pulverschicht und dem Bestrahlen mit dem Laser kann verringert werden, so dass für die Pulverschicht 32 dieselben Wirkungen erzielt werden wie für die Pulverschicht 31.

Als Nächstes wird die Pulverschicht 32 durch Bestrahlen mit dem Laserstrahl selektiv verfestigt. Dadurch ergibt sich der in Fig. 2c) gezeigte Aufbau, bei dem die selektiv verfestigten Bereiche der Schichten 30, 31 und 32 einen Teil des Objekts 2 bilden und von unverfestigt gebliebenem Pulver 11 umgeben sind. Wenn die Höhen der Pulverschichten wie oben als bevorzugt dargestellt komplementär zueinander sind, sind die Oberflächen der Schichten 30 und 32 parallel zu einander.

Anschließend wird erneut eine weitere Pulverschicht des Aufbaumaterials 13 wie in Fig. 2a) gezeigt aufgebracht und selektiv verfestigt und das oben beschriebene Verfahren solange wiederholt, bis das Objekt 2 fertiggestellt ist.

Durch die Verringerung des Temperaturgradienten in einer Schicht und das Verkürzen der Wartezeit zwischen Aufbringen und Verfestigen ist es möglich, sowohl die Qualität des hergestellten Objekts zu erhöhen als auch seine Herstellungszeit zu verkürzen.

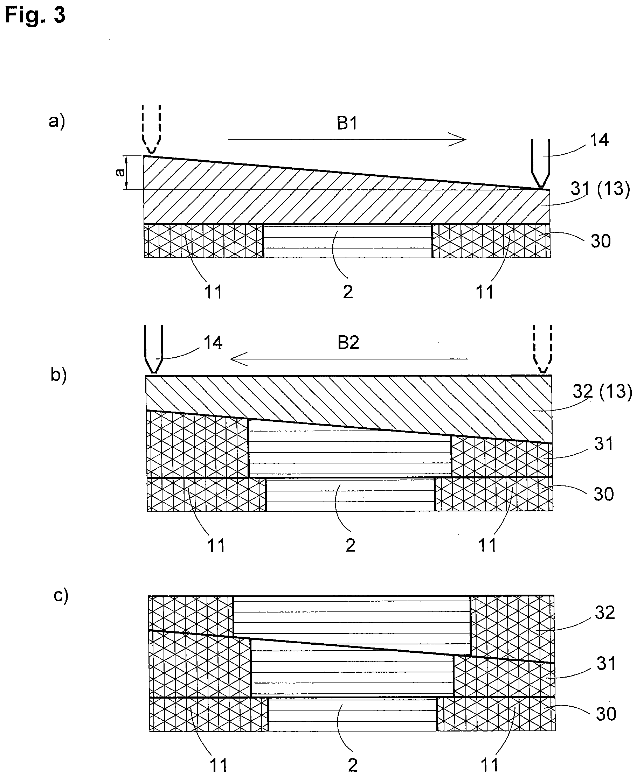

Fig. 3 zeigt eine erste Abwandlung der ersten Ausführungsform. Dabei wird zunächst, wie in Fig. 3a) gezeigt, auf einer zuvor aufgebrachten und selektiv verfestigten Pulverschicht 30 eine weitere Pulverschicht 31 des Aufbaumaterials 13 mittels einer Bewegung des Beschichters 14 in der ersten Bewegungsrichtung B1 aufgebracht. Dabei wird der der Beschichter 14 ähnlich wie mit Bezug auf Fig. 2a) beschrieben zusätzlich zu seiner horizontalen Bewegung vertikal um eine vorbestimmte Höhe a abgesenkt, so dass die Höhe der aufgebrachten Pulverschicht 31 in der Bewegungsrichtung B1 des Beschichters 14 abnimmt. Diese Veränderung der Höhe der Pulverschicht 31 ist vorzugsweise monoton, in weiter bevorzugter Weise linear.

Nach dem selektiven Verfestigen der Pulverschicht 31 wird auf der selektiv verfestigten Pulverschicht 31, wie in Fig. 3b) gezeigt, eine weitere Pulverschicht 32 des Aufbaumaterials 13 mittels einer Bewegung des Beschichters 14 in der zweiten Bewegungsrichtung B2 aufgebracht. Dabei wird der Beschichter 14 jedoch nicht vertikal abgesenkt.

Nach dem selektiven Verfestigen der Pulverschicht 32 ergibt sich der in Fig. 3c) gezeigte Aufbau, bei dem die selektiv verfestigten Bereiche der Schichten 30, 31 und 32 einen Teil des Objekts 2 bilden und von unverfestigt gebliebenem Pulver 11 umgeben sind. Da bei dieser Abwandlung jede zweite Pulverschicht ohne vertikales Absenken des Beschichters aufgebracht wird, sind auch hier die Höhen der Pulverschichten 31 und 32 komplementär zueinander, und die Oberflächen der Schichten 30 und 32 sind parallel zu einander und verlaufen horizontal.

Andere Merkmale dieser Abwandlung sind dieselben wie bei der ersten Ausführungsform. Bezüglich der Verringerung des Temperaturgradienten in einer Schicht und des Verkürzens der Wartezeit zwischen Aufbringen und Verfestigen hat diese Abwandlung dieselben Wirkungen wie die erste Ausführungsform. Dementsprechend kann auch bei dieser Abwandlung die Qualität des hergestellten Objekts verbessert und seine Herstellungszeit verkürzt werden.

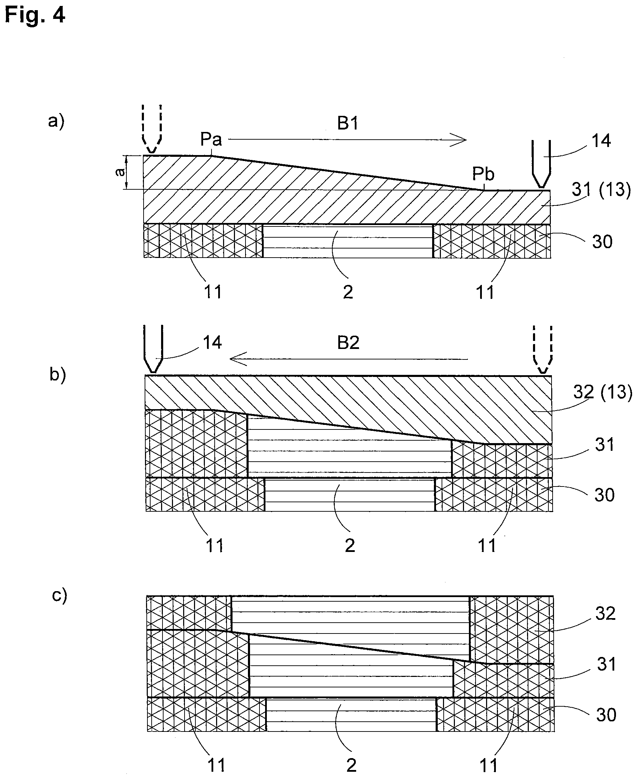

Fig. 4 zeigt eine zweite Abwandlung der ersten Ausführungsform. Dabei wird zunächst, wie in Fig. 4a) gezeigt, auf einer zuvor aufgebrachten und selektiv verfestigten Pulverschicht 30 eine weitere Pulverschicht 31 des Aufbaumaterials 13 mittels einer Bewegung des Beschichters 14 in der ersten Bewegungsrichtung B1 aufgebracht. Dabei wird der der Beschichter 14 ähnlich wie mit Bezug auf Fig. 2a) beschrieben zusätzlich zu seiner horizontalen Bewegung vertikal um eine vorbestimmte Höhe a abgesenkt, so dass die Höhe der aufgebrachten Pulverschicht 31 in der Bewegungsrichtung B1 des Beschichters 14 abnimmt. Dieses vertikale Absenken erfolgt jedoch nur in einem Teil des Wegs des Beschichters, nämlich zwischen den Punkten Pa und Pb. Außerhalb dieses Bereichs wird der Beschichter horizontal bewegt. In dem Bereich zwischen Pa und Pb ist die Veränderung der Höhe der Pulverschicht 31 vorzugsweise monoton, in weiter bevorzugter Weise linear.

Nach dem selektiven Verfestigen der Pulverschicht 31 wird auf der selektiv verfestigten Pulverschicht 31, wie in Fig. 4b) gezeigt, eine weitere Pulverschicht 32 des Aufbaumaterials 13 mittels einer Bewegung des Beschichters 14 in der zweiten Bewegungsrichtung B2 aufgebracht. In Fig. 4b) ist ein Fall gezeigt, bei dem der Beschichter wie in Fig. 3b) gezeigt nicht vertikal abgesenkt wird, er kann dabei jedoch auch ähnlich wie in Fig. 2b) gezeigt vertikal abgesenkt werden, wobei das Absenken auch wieder auf den Bereich zwischen Pb und Pa beschränkt sein kann oder auf einen anderen Bereich.

Nach dem selektiven Verfestigen der Pulverschicht 32 ergibt sich der in Fig. 4c) gezeigte Aufbau, bei dem die selektiv verfestigten Bereiche der Schichten 30, 31 und 32 einen Teil des Objekts 2 bilden und von unverfestigt gebliebenem Pulver 11 umgeben sind. In dem Bereich zwischen den Punkten Pa und Pb, in dem das Objekt 2 gebildet ist, sind die Schichthöhen der Pulverschichten 31 und 32 in Bewegungsrichtung des Beschichters 14 verändert. Außerhalb dieses Bereichs sind die Schichthöhen konstant.

Der Bereich zwischen Pa und Pb muss nicht in der Mitte des Beschichtungswegs liegen. Die Schichthöhe kann z.B. auch nur in dem letzten Bereich des Verfahrwegs des Beschichters verändert sein, so dass Pb dem Ende des Beschichtungswegs entspricht.

Andere Merkmale dieser Abwandlung sind dieselben wie bei der ersten Ausführungsform oder deren erster Abwandlung. Innerhalb des Bereichs zwischen Pa und Pb können daher bei dieser Abwandlung dieselben Wirkungen erzielt werden wie in der ersten Ausführungform oder deren erster Abwandlung. Dementsprechend kann auch bei dieser Abwandlung die Qualität des hergestellten Objekts verbessert und seine Herstellungszeit verkürzt werden.

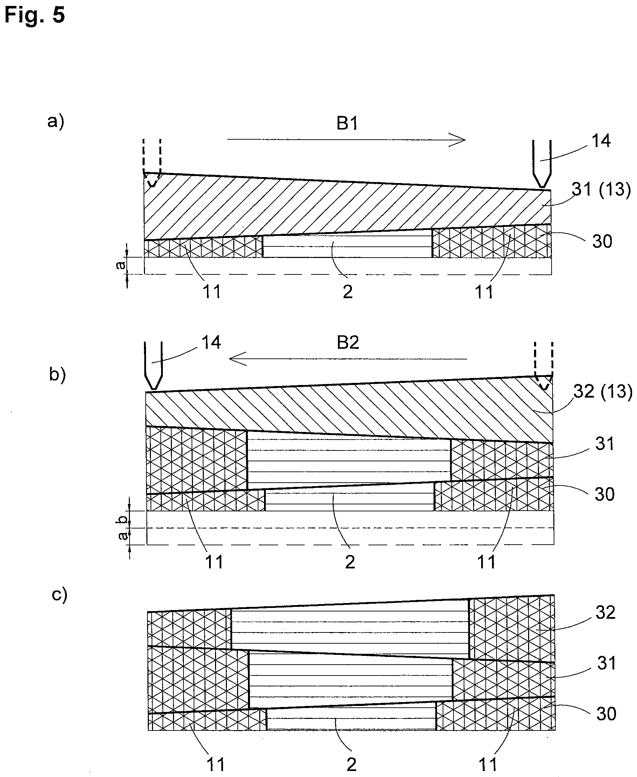

Mit Bezug auf Fig. 5 wird eine zweite Ausführungsform eines Verfahrens zum Herstellen eines dreidimensionalen Objekts beschrieben.

In dieser Ausführungsform wird, wie in Fig. 5a) gezeigt, auf einer zuvor aufgebrachten und selektiv verfestigten Pulverschicht 30 zunächst eine weitere Pulverschicht 31 des Aufbaumaterials 13 mittels einer Bewegung des Beschichters 14 in einer ersten Bewegungsrichtung B1 (in der Figur von links nach rechts) aufgebracht. Dabei führt der Beschichter lediglich eine horizontale Bewegung von seiner Ausgangsstellung (in der Figur links mit einer gestrichelten Linie dargestellt) in seine Endstellung (in der Figur rechts mit einer durchgezogenen Linie dargestellt) dar ohne vertikale Absenkung. Stattdessen wird der Träger 7 mitsamt dem auf ihm angeordneten Aufbau (dem bisher fertiggestellten Teil des Objekts 2, umgeben und von unverfestigt gebliebenem Pulver 11 und dem diesen Aufbau umschließenden Behälter 5) um eine vorbestimmte Höhe a angehoben. Die Unterseite des in Fig. 5a) dargestellten Ausschnitts bewegt sich also von seiner ursprünglichen Position (in der Figur durch eine gestrichelte Linie dargestellt) um die vorbestimmte Höhe a nach oben. Dabei wird die Oberfläche des zuerst aufgebrachten Abschnitts (in der Figur links) über die Höhe der Unterkante des Beschichters 14 hinweg angehoben, während die Oberfläche des zuletzt aufgebrachten Abschnitts (in der Figur rechts) auf der Höhe der Unterkante des Beschichters 14 liegt.

Ebenso wie bei der ersten Ausführungform nimmt daher die Höhe der aufgebrachten Pulverschicht 31 in der Bewegungsrichtung B1 des Beschichters 14 ab. Diese Veränderung der Höhe der Pulverschicht 31 ist vorzugsweise monoton, in weiter bevorzugter Weise linear.

Nach dem selektiven Verfestigen der Pulverschicht 31 wird auf der selektiv verfestigten Pulverschicht 31, wie in Fig. 5b) gezeigt, eine weitere Pulverschicht 32 des Aufbaumaterials 13 mittels einer Bewegung des Beschichters 14 in einer zweiten Bewegungsrichtung B2 (in der Figur von rechts nach links) aufgebracht. In der vorliegenden Ausführungsform ist die zweite Bewegungsrichtung B2 der ersten Bewegungsrichtung B1 entgegengesetzt.

Auch hierbei wird der Träger 7 mitsamt dem auf ihm angeordneten Aufbau um eine vorbestimmte Höhe b angehoben. Die Unterseite des in Fig. 5b) dargestellten Ausschnitts bewegt sich also von seiner Position nach der ersten Beschichtung (in der Figur durch eine enger gestrichelte Linie dargestellt) um die vorbestimmte Höhe b weiter nach oben. Dabei wird die Oberfläche des zuerst aufgebrachten Abschnitts (in der Figur rechts) über die Höhe der Unterkante des Beschichters 14 hinweg angehoben, während die Oberfläche des zuletzt aufgebrachten Abschnitts (in der Figur links) auf der Höhe der Unterkante des Beschichters 14 liegt. Die Höhe der aufgebrachten Pulverschicht 32 nimmt daher in der Bewegungsrichtung B2 des Beschichters 14 ab. Auch die Veränderung der Höhe der Pulverschicht 32 ist vorzugsweise monoton, in weiter bevorzugter Weise linear. In noch weiter bevorzugter Weise ist die Höhe der Pulverschicht 32 komplementär zu der Höhe der Pulverschicht 31 gebildet, so dass eine Gesamthöhe der beiden aufgebrachten Pulverschichten an jeder Stelle gleich einer konstanten, vordefinierten Höhe ist.

Nach dem selektiven Verfestigen der Pulverschicht 32 ergibt sich der in Fig. 5c) gezeigte Aufbau, bei dem die selektiv verfestigten Bereiche der Schichten 30, 31 und 32 einen Teil des Objekts 2 bilden und von unverfestigt gebliebenem Pulver 11 umgeben sind.

Andere Merkmale der zweiten Ausführungsform sind dieselben wie bei der ersten Ausführungsform. Bezüglich der Verringerung des Temperaturgradienten in einer Schicht und des Verkürzens der Wartezeit zwischen Aufbringen und Verfestigen hat die zweite Ausführungsform dieselben Wirkungen wie die erste Ausführungsform. Dementsprechend kann auch bei der zweiten Ausführungsform die Qualität des hergestellten Objekts verbessert und seine Herstellungszeit verkürzt werden.

Für die zweite Ausführungsform können dieselben Abwandlungen durchgeführt werden wie für die erste Ausführungsform. Außerdem kann die zweite Ausführungsform mit der ersten kombiniert werden, so dass ein Teil der Veränderung der Schichthöhe durch eine Vertikalbewegung des Beschichters und/oder ein Teil der Veränderung der Schichthöhe durch eine Vertikalbewegung des Trägers bewirkt wird.

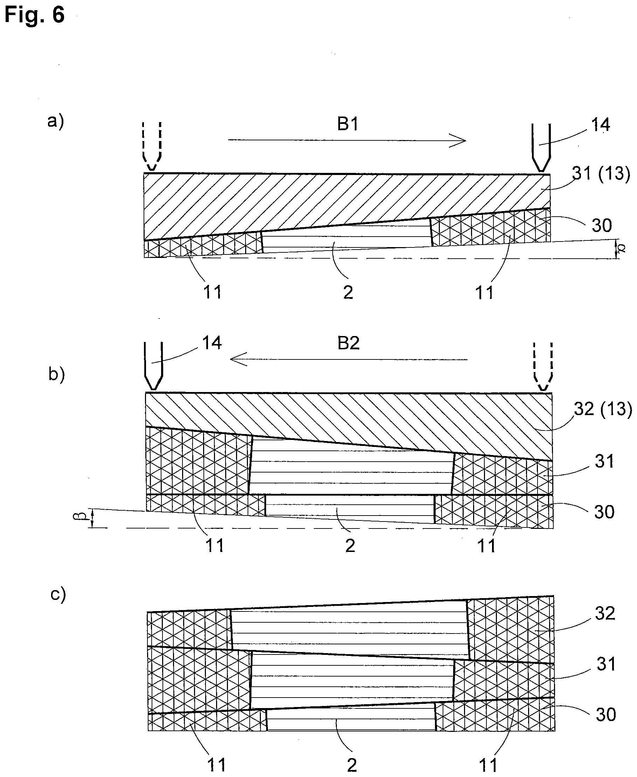

Mit Bezug auf Fig. 6 wird eine dritte Ausführungsform eines Verfahrens zum Herstellen eines dreidimensionalen Objekts beschrieben.

In dieser Ausführungsform wird, wie in Fig. 6a) gezeigt, auf einer zuvor aufgebrachten und selektiv verfestigten Pulverschicht 30 zunächst eine weitere Pulverschicht 31 des Aufbaumaterials 13 mittels einer Bewegung des Beschichters 14 in einer ersten Bewegungsrichtung B1 (in der Figur von links nach rechts) aufgebracht. Wie in der zweiten Ausführungsform führt der Beschichter lediglich eine horizontale Bewegung von seiner Ausgangsstellung (in der Figur links mit einer gestrichelten Linie dargestellt) in seine Endstellung (in der Figur rechts mit einer durchgezogenen Linie dargestellt) aus ohne vertikale Absenkung. Stattdessen wird der Träger 7 mitsamt dem auf ihm angeordneten Aufbau (dem bisher fertiggestellten Teil des Objekts 2, umgeben und von unverfestigt gebliebenem Pulver 11 und dem diesen Aufbau umschließenden Behälter 5) um einen vorbestimmten Winkel α geneigt. Die Unterseite des in Fig. 6a) dargestellten Ausschnitts ist also gegenüber seiner ursprünglichen Position (in der Figur durch eine gestrichelte Linie dargestellt) um den vorbestimmte Winkel α entgegen dem Uhrzeigersinn geneigt.

Ebenso wie bei der ersten und der zweiten Ausführungform nimmt daher die Höhe der aufgebrachten Pulverschicht 31 in der Bewegungsrichtung B1 des Beschichters 14 ab. Diese Veränderung der Höhe der Pulverschicht 31 ist vorzugsweise monoton, in weiter bevorzugter Weise linear.

Nach dem selektiven Verfestigen der Pulverschicht 31 wird auf der selektiv verfestigten Pulverschicht 31, wie in Fig. 6b) gezeigt, eine weitere Pulverschicht 32 des Aufbaumaterials 13 mittels einer Bewegung des Beschichters 14 in einer zweiten Bewegungsrichtung B2 (in der Figur von rechts nach links) aufgebracht. In der vorliegenden Ausführungsform ist die zweite Bewegungsrichtung B2 der ersten Bewegungsrichtung B1 entgegengesetzt.

Auch hierbei wird der Träger 7 mitsamt dem auf ihm angeordneten Aufbau und dem diesen umschließenden Behälter 5 (in der Figur nicht gezeigt) um einen vorbestimmten Winkel β geneigt. Die Unterseite des in Fig. 6a) dargestellten Ausschnitts ist also gegenüber seiner ursprünglichen Position (in der Figur durch eine gestrichelte Linie dargestellt) um den vorbestimmten Winkel β im Uhrzeigersinn geneigt.

Die Höhe der aufgebrachten Pulverschicht 32 nimmt daher in der Bewegungsrichtung B2 des Beschichters 14 ab. Auch die Veränderung der Höhe der Pulverschicht 32 ist vorzugsweise monoton, in weiter bevorzugter Weise linear. In noch weiter bevorzugter Weise ist die Höhe der Pulverschicht 32 komplementär zu der Höhe der Pulverschicht 31 gebildet, so dass eine Gesamthöhe der beiden aufgebrachten Pulverschichten an jeder Stelle gleich einer konstanten, vordefinierten Höhe ist.

Nach dem selektiven Verfestigen der Pulverschicht 32 ergibt sich der in Fig. 6c) gezeigte Aufbau, bei dem die selektiv verfestigten Bereiche der Schichten 30, 31 und 32 einen Teil des Objekts 2 bilden und von unverfestigt gebliebenem Pulver 11 umgeben sind.

Andere Merkmale der dritten Ausführungsform sind dieselben wie bei der ersten oder der zweiten Ausführungsform. Bezüglich der Verringerung des Temperaturgradienten in einer Schicht und des Verkürzens der Wartezeit zwischen Aufbringen und Verfestigen hat die dritte Ausführungsform dieselben Wirkungen wie die erste oder die zweite Ausführungsform. Dementsprechend kann auch bei der dritten Ausführungsform die Qualität des hergestellten Objekts verbessert und seine Herstellungszeit verkürzt werden.

Für die dritte Ausführungsform können dieselben Abwandlungen durchgeführt werden wie für die erste und die zweite Ausführungsform. Außerdem kann die dritte Ausführungsform mit der ersten und/oder der zweiten Ausführungsform kombiniert werden, so dass ein Teil der Veränderung der Schichthöhe durch eine Vertikalbewegung des Beschichters und/oder ein Teil der Veränderung der Schichthöhe durch eine Vertikalbewegung des Trägers und/oder ein Teil der Veränderung der Schichthöhe durch ein Neigen des Trägers bewirkt wird.

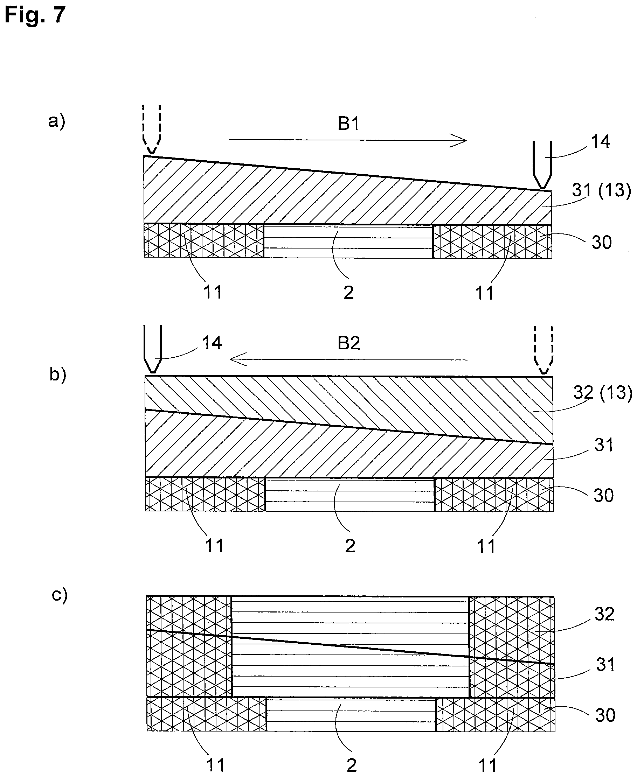

Mit Bezug auf Fig. 7 wird eine vierte Ausführungsform eines Verfahrens zum Herstellen eines dreidimensionalen Objekts beschrieben. Die vierte Ausführungsform wird anhand des Verfahrens zum Verändern der Schichthöhe gemäß der ersten Abwandlung der ersten Ausführungsform beschrieben, kann aber auf jede der vorher beschriebenen Ausführungsformen und ihre Abwandlungen angewendet werden.

In dieser Ausführungsform wird, wie in Fig. 7a) gezeigt, auf einer zuvor aufgebrachten und selektiv verfestigten Pulverschicht 30 zunächst eine weitere Pulverschicht 31 des Aufbaumaterials 13 aufgebracht. Dieses Aufbringen erfolgt wie in Fig. 3a) gezeigt und mit Bezug auf diese Figur beschrieben. Anstatt die aufgebrachte Schicht 31 zu verfestigen, wird direkt auf der noch unverfestigten Pulverschicht 31, wie in Fig. 7b) gezeigt, eine weitere Pulverschicht 32 des Aufbaumaterials 13 aufgebracht. Dieses Aufbringen erfolgt wie in Fig. 3b) gezeigt und mit Bezug auf diese Figur beschrieben.

Erst nach dem Aufbringen der zweiten Pulverschicht 32 werden die beiden Pulverschichten 31 und 32 gemeinsam verfestigt. Dadurch ergibt sich der in Fig. 7c) gezeigte Aufbau, bei dem die selektiv verfestigten Bereiche der Schichten 30, 31 und 32 einen Teil des Objekts 2 bilden und von unverfestigt gebliebenem Pulver 11 umgeben sind.

Gemäß der vierten Ausführungsform ist eine zu verfestigende Pulverschicht in zwei Pulverteilschichten 31, 32 unterteilt, die gemeinsam verfestigt werden. Dadurch, dass jede der beiden Pulverteilschichten in der jeweiligen Beschichtungsrichtung abnimmt, ergeben sich für die vierte Ausführungsform dieselben Wirkungen wie für die erste bis dritte Ausführungsform. Dementsprechend kann auch bei der vierten Ausführungsform die Qualität des hergestellten Objekts verbessert und seine Herstellungszeit verkürzt werden.

Wenn die Höhen der beiden Pulverteilschichten komplementär zueinander sind, so dass bei Gesamthöhe beider Schichten konstant ist, haben die einzelnen Schichten des hergestellten Objekts alle eine konstante Schichthöhe, was den gemäß dem Stand der Technik hergestellten Objekten entspricht. Somit ermöglicht es die vierte Ausführungsform, die zuvor beschriebenen Wirkungen der vorliegenden Erfindung, d.h. die Qualitätsverbesserung durch homogenere Temperaturverteilung in Beschichtungsrichtung und die Verkürzung der Wartezeit zwischen Aufbringen und Verfestigen, auch für Objekte zu erzielen, bei denen die einzelnen verfestigten Schichten eine konstante Schichthöhe haben.

Anstelle der Unterteilung der zu verfestigenden Pulverschicht in zwei Pulverteilschichten können auch mehr als zwei Pulverteilschichten vorgesehen sein. In diesem Fall erfolgt ein Verfestigen der gesamten Schicht erst nach dem Aufbringen der letzten Pulverteilschicht.

Während in den oben beschriebenen Ausführungsformen und ihren Abwandlungen die erste Bewegungsrichtung und die zweite Bewegungsrichtung einander entgegengesetzt sind, ist die vorliegende Erfindung nicht darauf eingeschränkt. Die zweite Bewegungsrichtung kann auch in anderer Weise von der ersten Bewegungsrichtung verschieden oder auch gleich der ersten Bewegungsrichtung sein. Insbesondere für einen solchen Fall (aber nicht darauf beschränkt), umfasst die erfindungsgemäße Veränderung der Höhe der Pulverschicht nicht nur eine Reduzierung (Abnahme) Höhe der Pulverschicht in der jeweiligen Bewegungsrichtung, sondern kann im Gegenteil auch als eine Zunahme, d.h. Erhöhung, der Pulverschicht in Bewegungsrichtung realisiert sein.

Während in den oben beschriebenen Ausführungsformen und ihren Abwandlungen der Beschichter immer in translatorischen Bewegung über die Auftragsfläche fährt, kann das Aufbringen der Pulverschichten auch mittels Rotationsbeschichtung erfolgen. Entgegengesetzte Bewegungsrichtung ist in diesem Fall mit entgegengesetzter Drehrichtung gleichzusetzen.

Während in den oben beschriebenen Ausführungsformen und ihren Abwandlungen die Höhe der aufgetragenen Pulverschicht in der Bewegungsrichtung des Beschichters abnimmt, kann sie auch zunehmen. So kann z.B. der in Fig. 2b gezeigte Schichtverlauf auch dadurch erzielt werden, dass das Aufbringen der Pulverschicht 32 ebenfalls in der ersten Bewegungsrichtung B1 erfolgt, der Beschichter dabei jedoch angehoben wird, so dass die Höhe der Pulverschicht 32 in Beschichtungsrichtung zunimmt.

Während in den oben beschriebenen Ausführungsformen und ihren Abwandlungen die Höhe jeder Schicht in der jeweiligen Bewegungsrichtung des Beschichters verändert wird, kann die Höhenveränderung auch nur für eine Anzahl ausgewählter Pulverschichten durchgeführt werden.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials angewendet werden.

Der Laser kann beispielsweise einen Gas- oder Festkörperlaser oder jede andere Art von Laser umfassen. Allgemein kann jede Einrichtung verwendet werden, mit der Energie selektiv auf eine Schicht des Aufbaumaterials aufgebracht werden kann. Anstelle eines Lasers können beispielsweise eine Mehrzahl von Lasern, eine andere Lichtquelle, ein Elektronenstrahl oder jede andere Energie- bzw. Strahlenquelle verwendet werden, die geeignet ist, das Aufbaumaterial zu verfestigen. Auch auf das selektive Maskensintern, bei dem eine ausgedehnte Lichtquelle und eine Maske verwendet werden, oder auf das Absorptions- bzw. Inhibitionssintern kann die Erfindung angewendet werden.

Anstelle des Einbringens von Energie kann das selektive Verfestigen des aufgebrachten Aufbaumaterials auch durch 3D-Drucken erfolgen, beispielsweise durch Aufbringen eines Klebers. Allgemein bezieht sich die Erfindung auf das Herstellen eines Objekts mittels schichtweisen Aufbringens und selektiven Verfestigens eines Aufbaumaterials unabhängig von der Art und Weise, in der das Aufbaumaterial verfestigt wird.

Bei allen oben beschriebenen Ausführungsformen und ihren Abwandlungen wird bevorzugt zumindest ein Parameterwert des selektiven Verfestigens der aufgebrachten Pulverschicht abhängig von der lokalen Höhe der Pulverschicht an der gerade zu verfestigenden Stelle geändert. Bei der in den Ausführungsformen beschriebenen Verfestigung mittels Laserstrahl oder bei anderen Energiestrahlen kann dieser Parameter beispielsweise die Intensität und/oder der Fokus des Strahls sein bzw. eine Abtastgeschwindigkeit, mit der der Strahl über die Oberfläche der aufgebrachten Pulverschicht geführt wird.

Als Aufbaumaterial können verschiedene Arten von Pulver verwendet werden, insbesondere Metallpulver, Keramikpulver, Sand, gefüllte oder gemischte Pulver. Besonders bevorzugt ist die Verwendung von Kunststoffpulver, da Kunststoffe beim Lasersintern oder ähnlichen selektiven Verfestigungsprozessen in der Regel einer zusätzlichen Erwärmung, insbesondere Pulverbett-Vorwärmung (wie oben beschrieben) unterzogen werden.

## Patentansprüche

1. Verfahren zum Herstellen eines dreidimensionalen Objekts (2) durch schichtweises Aufbringen und selektives Verfestigen eines pulverförmigen Aufbaumaterials (13) in einer Vorrichtung (1) mit den Schritten:
Aufbringen einer Pulverschicht (31, 32) des pulverförmigen Aufbaumaterials (13) auf ein Baufeld auf einer Auftragsfläche (10) der Vorrichtung (1) mittels eines sich in einer Bewegungsrichtung (B1, B2) über die Auftragsfläche bewegenden Beschichters (14),
selektives Verfestigen der aufgebrachten Pulverschicht (31, 32) an Stellen, die einem Querschnitt des herzustellenden Objekts (2) entsprechen, und
Wiederholen der Schritte des Aufbringens und des selektiven Verfestigens, bis das Objekt (2) fertiggestellt ist,
wobei zumindest eine Anzahl ausgewählter Schritte des Aufbringens der Pulverschicht dergestalt durchgeführt wird, dass eine Höhe der aufgebrachten Pulverschicht (31, 32) zumindest über einen Abschnitt der Pulverschicht hinweg entlang der Bewegungsrichtung (B1, B2) des Beschichters (14) verändert wird, vorzugsweise monoton zu- oder abnimmt und wobei
ein Beschichtungsabstand des Beschichters (14) relativ zur Auftragsfläche während seiner Bewegung über die Auftragsfläche (10) hinweg durch eine im Wesentlichen vertikale Bewegung des Beschichters (14) verändert wird und/oder
wobei das Objekt (2) auf einer Bauplattform und/oder Grundplatte (7, 8, 9) aufgebaut wird und ein Abstand der Bauplattform und/oder Grundplatte (7, 8, 9) relativ zur Auftragsfläche (10) während der Bewegung des Beschichters (14) über die Auftragsfläche (10) hinweg durch eine im Wesentlichen vertikale Bewegung der Bauplattform und/oder Grundplatte (7, 8, 9) verändert wird und/oder die Bauplattform und/oder Grundplatte (7, 8, 9) vor und/oder während der Bewegung des Beschichters (14) über die Auftragsfläche (10) hinweg relativ zu einer im Wesentlichen horizontalen Ausrichtungsebene der Bauplattform und/oder Grundplatte (7, 8, 9) geneigt wird.

2. Verfahren gemäß Anspruch 1, bei dem der ausgewählte Schritt dergestalt durchgeführt wird, dass die Höhe der aufgebrachten Pulverschicht (40) nur über einen Teilabschnitt (Pa-Pb) der Pulverschicht hinweg in der Bewegungsrichtung (B1, B2) des Beschichters (14) verändert wird.

3. Verfahren gemäß Anspruch 1 oder 2, bei dem
der Schritt des Aufbringens der Pulverschicht (31, 32) bei jeder Wiederholung abwechselnd mittels einer Bewegung des Beschichters (14) in einer ersten Bewegungsrichtung (B1) und mittels einer Bewegung des Beschichters (14) in einer zweiten Bewegungsrichtung (B2) erfolgt und
der Schritt des selektiven Verfestigens sowohl nach dem Aufbringen der Pulverschicht (31) in der ersten Bewegungsrichtung (B1) als auch nach dem Aufbringen der Pulverschicht (32) in der zweiten Bewegungsrichtung (B1) erfolgt,
wobei die Höhe der in der ersten Bewegungsrichtung (B1) aufgebrachten Pulverschicht (31) zumindest über einen Abschnitt der Pulverschicht hinweg in der ersten Bewegungsrichtung (B1) verändert wird und/oder
die Höhe der in der zweiten Bewegungsrichtung (B2) aufgebrachten Pulverschicht (32) zumindest über einen Abschnitt der Pulverschicht hinweg in der zweiten Bewegungsrichtung (B2) verändert wird.

4. Verfahren gemäß Anspruch 1 oder 2, bei dem
der Schritt des Aufbringens der Pulverschicht bei jeder Wiederholung abwechselnd mittels einer Bewegung des Beschichters (14) in einer ersten Bewegungsrichtung (B1) und mittels einer Bewegung des Beschichters (14) in einer zweiten Bewegungsrichtung (B2) erfolgt, und
der Schritt des selektiven Verfestigens erst erfolgt, nachdem zumindest eine Pulverschicht (31) in der ersten Bewegungsrichtung (B1) und zumindest eine Pulverschicht (32) in der zweiten Bewegungsrichtung (B1) aufgebracht wurden,
wobei die Höhe der in der ersten Bewegungsrichtung (B1) aufgebrachten Pulverschicht oder Pulverschichten (31) zumindest über einen Abschnitt der Pulverschicht oder Pulverschichten hinweg in der ersten Bewegungsrichtung (B1) verändert wird und/oder
die Höhe der in der zweiten Bewegungsrichtung (B2) aufgebrachten Pulverschicht oder Pulverschichten (32) zumindest über einen Abschnitt der Pulverschicht oder Pulverschichten hinweg in der zweiten Bewegungsrichtung (B2) verändert wird.

5. Verfahren gemäß Anspruch 3 oder 4, bei dem
die Höhe der in der zweiten Bewegungsrichtung (B2) aufgebrachten Pulverschicht komplementär (32) zu der Höhe der in der ersten Bewegungsrichtung (B1) aufgebrachten Pulverschicht (31) gebildet ist, so dass eine Gesamthöhe der beiden aufgebrachten Pulverschichten an jeder Stelle gleich einer konstanten Höhe ist.

6. Verfahren gemäß einem der Ansprüche 3 bis 5, bei dem
die zweite Richtung (B2) von der ersten Richtung (B1) verschieden ist, vorzugsweise ihr entgegengesetzt ist.

7. Verfahren gemäß einem der Ansprüche 1 bis 6, bei dem
zumindest eine der Pulverschichten (31, 32), bevorzugt eine Mehrzahl, besonders bevorzugt jede Pulverschicht während ihres Aufbringens beheizt wird.

8. Verfahren gemäß einem der Ansprüche 1 bis 7, bei dem
zumindest ein Parameterwert des selektiven Verfestigens der aufgebrachten Pulverschicht (30, 31) abhängig von der lokalen Höhe der Pulverschicht an der gerade zu verfestigenden Stelle geändert wird.

9. Verfahren gemäß Anspruch 8, bei dem
das Verfestigen durch selektives Abtasten der Oberfläche der aufgebrachten Pulverschicht (30, 31) an den zu verfestigenden Stellen mittels eines Energiestrahls (14) erfolgt und
ein Parameterwert des auf das Pulver auftreffenden Energiestrahls (22) abhängig von der lokalen Höhe der Pulverschicht an der gerade zu verfestigenden Stelle geändert wird,
wobei der abhängig von der lokalen Höhe zu ändernde Parameter vorzugsweise gewählt ist aus der Intensität und/oder der Leistung und/oder dem Fokus, insbesondere der Fokustopologie und/oder Fokuslage, des Energiestrahls und/oder der Abtastgeschwindigkeit, mit der der Energiestrahl über die Oberfläche der aufgebrachten Pulverschicht geführt wird.

10. Computerprogramm, das in eine programmierbare Steuereinheit (29) ladbar ist, mit Programmcodemitteln, um alle Schritte eines Verfahrens gemäß einem der Ansprüche 1 bis 9 auszuführen, wenn das Computerprogramm auf der Steuereinheit (29) ausgeführt wird.

11. Steuereinheit (29) für eine Vorrichtung (1) zum Herstellen eines dreidimensionalen Objekts (2) durch schichtweises Aufbringen und selektives Verfestigen eines pulverförmigen Aufbaumaterials (13), wobei die Steuereinheit ausgebildet ist, im Betrieb folgende Schritte zu steuern:
Aufbringen einer Pulverschicht (31, 32) des pulverförmigen Aufbaumaterials (13) auf ein Baufeld auf einer Auftragsfläche (10) der Vorrichtung (1) mittels eines sich in einer Bewegungsrichtung (B) über die Auftragsfläche bewegenden Beschichters (14),
selektives Verfestigen der aufgebrachten Pulverschicht an Stellen, die einem Querschnitt des herzustellenden Objekts (2) entsprechen, und
Wiederholen der Schritte des Aufbringens und des selektiven Verfestigens, bis das Objekt (2) fertiggestellt ist,
wobei die Steuereinheit ausgebildet ist, zumindest eine Anzahl ausgewählter Schritte des Aufbringens der Pulverschicht dergestalt zu steuern, dass eine Höhe der aufgebrachten Pulverschicht zumindest über einen Abschnitt der Pulverschicht (31, 32) hinweg entlang der Bewegungsrichtung (B1, B2) des Beschichters (14) verändert wird, vorzugsweise monoton zu- oder abnimmt, und wobei
ein Beschichtungsabstand des Beschichters (14) relativ zur Auftragsfläche während seiner Bewegung über die Auftragsfläche (10) hinweg durch eine im Wesentlichen vertikale Bewegung des Beschichters (14) verändert wird und/oder
wobei das Objekt (2) auf einer Bauplattform und/oder Grundplatte (7, 8, 9) aufgebaut wird und ein Abstand der Bauplattform und/oder Grundplatte (7, 8, 9) relativ zur Auftragsfläche (10) während der Bewegung des Beschichters (14) über die Auftragsfläche (10) hinweg durch eine im Wesentlichen vertikale Bewegung der Bauplattform und/oder Grundplatte (7, 8, 9) verändert wird und/oder die Bauplattform und/oder Grundplatte (7, 8, 9) vor und/oder während der Bewegung des Beschichters (14) über die Auftragsfläche (10) hinweg relativ zu einer im Wesentlichen horizontalen Ausrichtungsebene der Bauplattform und/oder Grundplatte (7, 8, 9) geneigt wird.

12. Vorrichtung (1) zum Herstellen eines dreidimensionalen Objekts (2) durch selektives schichtweises Verfestigen von pulverförmigem Aufbaumaterial (13), umfassend:
einen über eine Auftragsfläche (10) in einer Bewegungsrichtung (B) bewegbaren Beschichter (12-14) zum Aufbringen einer Schicht (40) des pulverförmigen Aufbaumaterials (13) auf ein Baufeld in der Auftragsfläche (10) und
eine Verfestigungsvorrichtung (20) zum selektives Verfestigen der aufgebrachten Pulverschicht (31, 32) an Stellen, die einem Querschnitt des herzustellenden Objekts (2) entsprechen
wobei die Vorrichtung ausgebildet und/oder gesteuert ist:
die Schritte des Aufbringens und des selektiven Verfestigens zu wiederholen, bis das Objekt (2) fertiggestellt ist, und
zumindest eine Anzahl ausgewählter Schritte des Aufbringens der Pulverschicht dergestalt durchzuführen, dass eine Höhe der aufgebrachten Pulverschicht (31, 32) zumindest über einen Abschnitt der Pulverschicht hinweg entlang der Bewegungsrichtung (B1, B2) des Beschichters (14) verändert wird, vorzugsweise monoton zu- oder abnimmt, und wobei
ein Beschichtungsabstand des Beschichters (14) relativ zur Auftragsfläche während seiner Bewegung über die Auftragsfläche (10) hinweg durch eine im Wesentlichen vertikale Bewegung des Beschichters (14) verändert wird und/oder
wobei das Objekt (2) auf einer Bauplattform und/oder Grundplatte (7, 8, 9) aufgebaut wird und ein Abstand der Bauplattform und/oder Grundplatte (7, 8, 9) relativ zur Auftragsfläche (10) während der Bewegung des Beschichters (14) über die Auftragsfläche (10) hinweg durch eine im Wesentlichen vertikale Bewegung der Bauplattform und/oder Grundplatte (7, 8, 9) verändert wird und/oder die Bauplattform und/oder Grundplatte (7, 8, 9) vor und/oder während der Bewegung des Beschichters (14) über die Auftragsfläche (10) hinweg relativ zu einer im Wesentlichen horizontalen Ausrichtungsebene der Bauplattform und/oder Grundplatte (7, 8, 9) geneigt wird,
und wobei die Vorrichtung (1) vorzugsweise weiter eine Strahlungsheizung (16) enthält zum Beheizen der Pulverschichten während ihres Aufbringens.

## Claims

1. A method for manufacturing a three-dimensional object (2) by a layer-by-layer application and selective solidification of a building material (13) in powder form in a device (1), comprising the steps of:
applying a powder layer (31, 32) of the building material (13) in powder form to a build area on an application surface (10) of the device (1) by means of a recoater (14) moving in a movement direction (B1, B2) across the application surface,
selectively solidifying the applied powder layer (31, 32) at positions corresponding to a cross-section of the object (2) to be manufactured, and
repeating the steps of applying and selectively solidifying until the object (2) is completed,
wherein at least a number of selected steps of applying the powder layer is performed in such a manner that a height of the applied powder layer (31, 32) is varied at least across a section of the powder layer along the movement direction (B1, B2) of the recoater (14), preferably monotonously increases or decreases, and wherein
a recoating distance of the recoater (14) relative to the application surface is varied during its movement across the application surface (10) by a substantially vertical movement of the recoater (14) and/or
wherein the object (2) is built up on a building platform and/or base plate (7, 8, 9) and a distance of the building platform and/or base plate (7, 8, 9) relative to the application surface (10) is varied during the movement of the recoater (14) across the application surface (10) by a substantially vertical movement of the building platform and/or base plate (7, 8, 9) and/or the building platform and/or base plate (7, 8, 9) is tilted relatively to a substantially horizontal orientation plane of the building platform and/or base plate (7, 8, 9) prior to and/or during the movement of the recoater (14) across the application surface(10).

2. The method according to claim 1, wherein the selected step is performed in such a manner that the height of the applied powder layer is only varied across a partial section (Pa-Pb) of the powder layer in the movement direction (B1, B2) of the recoater (14).

3. The method according to claim 1 or 2, wherein
the step of applying the powder layer (31, 32) is carried out at each repetition alternately by means of a movement of the recoater (14) in a first movement direction (B1) and by means of a movement of the recoater (14) in a second movement direction (B2) and
the step of selectively solidifying is carried out both after the application of the powder layer (31) in the first movement direction (B1) and after the application of the powder layer (32) in the second movement direction (B2),
wherein the height of the powder layer (31) applied in the first movement direction (B1) is varied at least across a section of the powder layer in the first movement direction (B1) and/or
the height of the powder layer (32) applied in the second movement direction (B2) is varied at least across a section of the powder layer in the second movement direction (B2) .

4. The method according to claim 1 or 2, wherein the step of applying the powder layer is carried out at each repetition alternately by means of a movement of the recoater (14) in a first movement direction (B1) and by means of a movement of the recoater (14) in a second movement direction (B2), and
the step of selectively solidifying is carried out only after at least one powder layer (31) in the first movement direction (B1) and at least one powder layer (32) in the second movement direction (B2) have been applied,
wherein the height of the powder layer or powder layers (31) applied in the first movement direction (B1) is varied at least across a section of the powder layer or powder layers in the first movement direction (B1) and/or
the height of the powder layer or powder layers (32) applied in the second movement direction (B2) is varied at least across a section of the powder layer or powder layers in the second movement direction (B2).

5. The method according to claim 3 or 4, wherein
the height of the powder layer (32) applied in the second movement direction (B2) is complementary formed to the height of the powder layer (31) applied in the first movement direction (B1), so that a total height of the two powder layers applied is equal to a constant height at each position.

6. The method according to one of claims 3 to 5, wherein
the second direction (B2) is different from the first direction (B1), preferably opposite to it.

7. The method according to one of claims 1 to 6, wherein
at least one of the powder layers (31, 32), preferably a plurality, particularly preferably each powder layer is heated while being applied.

8. The method according to one of claims 1 to 7, wherein
at least one parameter value of the selective solidification of the applied powder layer (30, 31) is varied depending on the local height of the powder layer at the position currently to be solidified.

9. The method according to claim 8, wherein
the solidification is carried out by selectively scanning the surface of the applied powder layer (30, 31) at the positions to be solidified by means of an energy beam and
a parameter value of the energy beam (22) impinging onto the powder is varied depending on the local height of the powder layer at the position currently to be solidified,
wherein the parameter to be varied depending on the local height is preferably selected from the intensity and/or the power and/or the focus, particularly the focus topology and/or focus position, of the energy beam and/or the scanning velocity by which the energy beam is directed across the surface of the applied powder layer.

10. A computer program loadable into a programmable control unit (29) and having program code means in order to perform all steps of a method according to one of claims 1 to 9 when the computer program is executed in the control unit (29).

11. A control unit (29) for a device (1) for manufacturing a three-dimensional object (2) by a layer-by-layer application and selective solidification of a building material (13) in powder form, wherein the control unit is configured to control the following steps during operation:
applying a powder layer (31, 32) of the building material (13) in powder form to a build area on an application surface (10) of the device (1) by means of a recoater (14) moving in a movement direction (B) across the application surface,
selectively solidifying the applied powder layer at positions corresponding to a cross-section of the object (2) to be manufactured, and
repeating the steps of applying and selectively solidifying until the object (2) is completed,
wherein the control unit is configured to control at least a number of selected steps of applying the powder layer in such a manner that a height of the applied powder layer is varied at least across a section of the powder layer (31, 32) along the movement direction (B1, B2) of the recoater (14), preferably monotonously increases or decreases, and wherein
a recoating distance of the recoater (14) relative to the application surface is varied during its movement across the application surface (10) by a substantially vertical movement of the recoater (14) and/or
wherein the object (2) is built up on a building platform and/or base plate (7, 8, 9) and a distance of the building platform and/or base plate (7, 8, 9) relative to the application surface (10) is varied during the movement of the recoater (14) across the application surface (10) by a substantially vertical movement of the building platform and/or base plate (7, 8, 9) and/or the building platform and/or base plate (7, 8, 9) is tilted relatively to a substantially horizontal orientation plane of the building platform and/or base plate (7, 8, 9) prior to and/or during the movement of the recoater (14) across the application surface(10).

12. A device (1) for manufacturing a three-dimensional object (2) by a selective layer-by-layer solidification of a building material (13) in powder form, comprising:
a recoater (12-14) movable across an application surface (10) in a movement direction (B) for applying a layer (40) of the building material (13) in powder form onto a build area in the application surface (10) and
a solidification device (20) for selectively solidifying the applied powder layer (31, 32) at positions corresponding to a cross-section of the object (2) to be manufactured,
wherein the device is configured and/or controlled such as:
to repeat the steps of applying and selectively solidifying until the object (2) is completed and
to perform at least a number of selected steps of applying the powder layer in such a manner that a height of the applied powder layer (31, 32) is varied at least across a section of the powder layer along the movement direction (B1, B2) of the recoater (14), preferably monotonously increases or decreases, and wherein
a recoating distance of the recoater (14) relative to the application surface is varied during its movement across the application surface (10) by a substantially vertical movement of the recoater (14) and/or
wherein the object (2) is built up on a building platform and/or base plate (7, 8, 9) and a distance of the building platform and/or base plate (7, 8, 9) relative to the application surface (10) is varied during the movement of the recoater (14) across the application surface (10) by a substantially vertical movement of the building platform and/or base plate (7, 8, 9) and/or the building platform and/or base plate (7, 8, 9) is tilted relatively to a substantially horizontal orientation plane of the building platform and/or base plate (7, 8, 9) prior to and/or during the movement of the recoater (14) across the application surface(10),
and wherein the device (1) preferably further comprises a radiation heater (16) for heating the powder layers during their application.

## Revendications

1. Procédé pour la fabrication d'un objet tridimensionnel (2) par application couche par couche et solidification sélective d'un matériau constitutif en poudre (13) dans un dispositif (1), comprenant les étapes consistant à :
appliquer une couche de poudre (31, 32) du matériau constitutif en poudre (13) sur un site de construction sur une surface de dépôt (10) du dispositif (1) au moyen d'un dispositif de dépôt (14) mobile dans une direction de déplacement (B1, B2) au-dessus de la surface de dépôt,
solidifier sélectivement la couche de poudre appliquée (31, 32) à des endroits correspondant à une section transversale de l'objet (2) à fabriquer, et
répéter les étapes d'application et de solidification sélective jusqu'à ce que l'objet (2) soit achevé,
dans lequel au moins un certain nombre d'étapes sélectionnées d'application de la couche de poudre sont réalisées de manière à ce qu'une hauteur de la couche de poudre appliquée (31, 32) soit modifiée, de préférence de manière monotone croissante ou décroissante, au moins sur une section de la couche de poudre, le long de la direction de déplacement (B1, B2) du dispositif de dépôt (14), et dans lequel
une distance de dépôt du dispositif de dépôt (14) par rapport à la surface de dépôt, pendant son déplacement au-dessus de la surface de dépôt (10), est modifiée par un déplacement sensiblement vertical du dispositif de dépôt (14) et/ou
dans lequel l'objet (2) est construit sur une plate-forme de construction et/ou sur une plaque de base (7, 8, 9) et une distance de la plate-forme de construction et/ou de la plaque de base (7, 8, 9) par rapport à la surface de dépôt (10) est modifiée pendant le déplacement du dispositif de dépôt (14) au-dessus de la surface de dépôt (10) par un déplacement sensiblement vertical de la plate-forme de construction et/ou de la plaque de base (7, 8, 9) et/ou la plate-forme de construction et/ou la plaque de base (7, 8, 9) est inclinée par rapport à un plan d'alignement sensiblement horizontal de la plate-forme de construction et/ou de la plaque de base (7, 8, 9) avant et/ou pendant le déplacement du dispositif de dépôt (14) au-dessus de la surface de dépôt (10).

2. Procédé selon la revendication 1, dans lequel l'étape sélectionnée est effectuée de manière à ce que la hauteur de la couche de poudre appliquée (40) ne soit modifiée que sur une section partielle (Pa-Pb) de la couche de poudre dans la direction de déplacement (B1, B2) du dispositif de dépôt (14).

3. Procédé selon la revendication 1 ou 2, dans lequel
l'étape d'application de la couche de poudre (31, 32) lors de chaque répétition est effectuée alternativement par un déplacement du dispositif de dépôt (14) dans une première direction de déplacement (B1) et par un déplacement du dispositif de dépôt (14) dans une deuxième direction de déplacement (B2) et
l'étape de solidification sélective est effectuée à la fois après application de la couche de poudre (31) dans la première direction de déplacement (B1) et après application de la couche de poudre (32) dans la deuxième direction de déplacement (B1),
dans lequel la hauteur de la couche de poudre (31) déposée dans la première direction de déplacement (B1) est modifiée au moins sur une section de la couche de poudre dans la première direction de déplacement (B1) et/ou
la hauteur de la couche de poudre (32) déposée dans la deuxième direction de déplacement (B2) est modifiée au moins sur une section de la couche de poudre dans la deuxième direction de déplacement (B2).

4. Procédé selon la revendication 1 ou 2, dans lequel
l'étape d'application de la couche de poudre lors de chaque répétition est effectuée alternativement par un déplacement du dispositif de dépôt (14) dans une première direction de déplacement (B1) et par un déplacement du dispositif de dépôt (14) dans une deuxième direction de déplacement (B2), et
l'étape de solidification sélective n'est effectuée qu'après qu'au moins une couche de poudre (31) a été déposée dans la première direction de déplacement (B1) et qu'au moins une couche de poudre (32) a été déposée dans la deuxième direction de déplacement (B1),
dans lequel la hauteur de la couche de poudre ou des couches de poudre (31) appliquées dans la première direction de déplacement (B1) est modifiée dans la première direction de déplacement (B1) au moins sur une section de la couche de poudre ou des couches de poudre et/ou
la hauteur de la couche de poudre ou des couches de poudre (32) déposées dans la deuxième direction de déplacement (B2) est modifiée dans la deuxième direction de déplacement (B2) au moins sur une section de la couche de poudre ou des couches de poudre.

5. Procédé selon la revendication 3 ou 4, dans laquelle
la hauteur de la couche de poudre déposée dans la deuxième direction de déplacement (B2) est complémentaire (32) de la hauteur de la couche de poudre (31) déposée dans la première direction de déplacement (B1) de manière à ce qu'une hauteur totale des deux couches de poudre déposées à chaque endroit soit égale à une hauteur constante.

6. Procédé selon l'une quelconque des revendications 3 à 5, dans lequel
la deuxième direction (B2) est différente de la première direction (B1), de préférence opposée à celle-ci.

7. Procédé selon l'une quelconque des revendications 1 à 6, dans lequel
au moins l'une des couches de poudre (31, 32), de préférence une pluralité, plus préférablement chaque couche de poudre, est chauffée pendant son application.

8. Procédé selon l'une quelconque des revendications 1 à 7, dans lequel
au moins une valeur de paramètre de la solidification sélective de la couche de poudre appliquée (30, 31) est modifiée en fonction de la hauteur locale de la couche de poudre à l'endroit devant être solidifié.

9. Procédé selon la revendication 8, dans lequel
la solidification est effectuée par balayage sélectif de la surface de la couche de poudre appliquée (30, 31) aux endroits devant être solidifiés au moyen d'un faisceau d'énergie (14) et
une valeur de paramètre du faisceau d'énergie (22) incident sur la poudre est modifiée en fonction de la hauteur locale de la couche de poudre à l'endroit devant être solidifié,
dans lequel le paramètre à modifier en fonction de la hauteur locale est de préférence sélectionné parmi l'intensité et/ou la puissance et/ou la focalisation, en particulier la topologie de focalisation et/ou la position de focalisation, du faisceau d'énergie, et/ou la vitesse de balayage avec laquelle le faisceau d'énergie est guidé sur la surface de la couche de poudre déposée.

10. Programme d'ordinateur pouvant être chargé dans une unité de commande programmable (29) comprenant des moyens à code de programme, pour mettre en oeuvre toutes les étapes d'un procédé selon l'une quelconque des revendications 1 à 9 lorsque le programme d'ordinateur est exécuté sur l'unité de commande (29).

11. Unité de commande (29) destinée à un appareil (1) servant à produire un objet tridimensionnel (2) par application couche par couche et solidification sélective d'un matériau constitutif en poudre (13), l'unité de commande étant conçue pour commander, lors du fonctionnement, les étapes consistant à :
appliquer une couche de poudre (31, 32) du matériau constitutif en poudre (13) sur un site de construction sur une surface de dépôt (10) du dispositif (1) au moyen d'un dispositif de dépôt (14) mobile dans une direction de déplacement (B) au-dessus la surface de dépôt,
solidifier sélectivement la couche de poudre appliquée à des endroits correspondant à une section transversale de l'objet (2) à fabriquer, et
répéter les étapes d'application et de solidification sélective jusqu'à ce que l'objet (2) soit achevé,
dans laquelle l'unité de commande est conçue pour commander au moins un certain nombre d'étapes sélectionnées d'application de la couche de poudre de telle manière qu'une hauteur de la couche de poudre appliquée soit modifiée, de préférence de manière monotone croissante ou décroissante, au moins sur une partie de la couche de poudre (31, 32), le long de la direction de déplacement (B1, B2) du dispositif de dépôt (14), et
dans laquelle une distance de dépôt du dispositif de dépôt (14) par rapport à la surface de dépôt pendant son déplacement au-dessus de la surface de dépôt (10) est modifiée par un déplacement sensiblement vertical du dispositif de dépôt (14), et/ou
dans laquelle l'objet (2) est construit sur une plate-forme de construction et/ou une plaque de base (7, 8, 9) et une distance de la plate-forme de construction et/ou de la plaque de base (7, 8, 9) par rapport à la surface de dépôt (10) est modifiée pendant le déplacement du dispositif de dépôt (14) au-dessus la surface de dépôt (10) par un déplacement sensiblement vertical de la plate-forme de construction et/ou de la plaque de base (7, 8, 9), et/ou la plate-forme de construction et/ou la plaque de base (7, 8, 9) est inclinée par rapport à un plan d'alignement sensiblement horizontal de la plate-forme de construction et/ou de la plaque de base (7, 8, 9) avant et/ou pendant le déplacement du dispositif de dépôt (14) au-dessus la surface de dépôt (10).

12. Dispositif (1) pour la fabrication d'un objet tridimensionnel (2) par solidification sélective couche par couche d'un matériau constitutif en poudre (13), comprenant :
un dispositif de dépôt (12-14) mobile au-dessus d'une surface de dépôt (10) dans une direction de déplacement (B) pour appliquer une couche (40) du matériau constitutif en poudre (13) sur un site de construction dans la surface de dépôt (10), et
un dispositif de durcissement (20) pour durcir sélectivement la couche de poudre appliquée (31, 32) à des endroits correspondant à une section transversale de l'objet (2) à fabriquer,
dans lequel le dispositif est conçu et/ou commandé pour : répéter les étapes d'application et de solidification sélective jusqu'à ce que l'objet (2) soit achevé, et
effectuer au moins un certain nombre d'étapes sélectionnées d'application de la couche de poudre de manière à ce qu'une hauteur de la couche de poudre appliquée (31, 32) soit modifiée, de préférence de manière monotone croissante ou décroissante, au moins sur une section de la couche de poudre, le long de la direction de déplacement (B1, B2) du dispositif de dépôt (14), et dans lequel
une distance de dépôt du dispositif de dépôt (14) par rapport à la surface de dépôt, pendant son déplacement au-dessus de la surface de dépôt (10), est modifiée par un déplacement sensiblement vertical du dispositif de dépôt (14) et/ou
dans lequel l'objet (2) est construit sur une plate-forme de construction et/ou sur une plaque de base (7, 8, 9) et une distance de la plate-forme de construction et/ou de la plaque de base (7, 8, 9) par rapport à la surface de dépôt (10) est modifiée pendant le déplacement du dispositif de dépôt (14) au-dessus la surface de dépôt (10) par un déplacement sensiblement vertical de la plate-forme de construction et/ou de la plaque de base (7, 8, 9) et/ou la plate-forme de construction et/ou la plaque de base (7, 8, 9) est inclinée par rapport à un plan d'alignement sensiblement horizontal de la plate-forme de construction et/ou de la plaque de base (7, 8, 9) avant et/ou pendant le déplacement du dispositif de dépôt (14) au-dessus de la surface de dépôt (10),
et dans lequel le dispositif (1) comprend de préférence en outre un chauffage radiant (16) servant à chauffer les couches de poudre pendant leur application.
